# DEMANDE DE BREVET EUROPEEN

(11) **EP 1 783 401 A1**
(43) Date de publication de la demande: **09.05.2007**
(21) Numéro de dépôt: 06301081.3
(22) Date de dépôt: 23.10.2006
(51) Int. Cl.: F16H 25/24, B60T 7/10, F16H 25/00, F16H 25/12, F16H 53/00, F16F 1/04, F16H 19/00

(54) **Ensemble d'actionnement pour dispositif mécanique, dispositif électrique de freinage de stationnement comportant un tel ensemble d'actionnement, et véhicule automobile correspondant**

(30) Priorité: 25.10.2005 FR 0510883
(71) Demandeur: Peugeot Citroen Automobiles SA, 78140 Vélizy-Villacoublay (FR)
(72) Inventeur: Bailleux, François, 91400, Val d'Albian (FR)

(57) **Abrégé**

Cet ensemble d'actionnement comprend un moteur (2) possédant un arbre rotatif (4), un boîtier (6) dans lequel sont reçus cet arbre (4), ainsi qu'une spirale (12) formée d'un certain nombre d'enroulements (12₁-12ₙ), un organe intermédiaire (14), lié en rotation audit arbre (4), tout en étant libre en translation par rapport à cet arbre (4), au moins selon la direction principale (X'-X) de ce dernier, et un organe d'actionnement (22), lié en translation par rapport à l'organe intermédiaire (14) tout en étant libre en rotation par rapport à cet organe intermédiaire (14), au moins selon l'axe principal de l'arbre, des enroulements (12ₘ) de la spirale (12) étant propres à passer de part et d'autre de l'organe intermédiaire (14), lors de sa mise en rotation, de manière à provoquer le déplacement axial de cet organe intermédiaire (14) et de l'organe d'actionnement (22).

## Description

La présente invention concerne un ensemble d'actionnement d'un dispositif mécanique, un dispositif électrique de freinage de stationnement comprenant un tel ensemble d'actionnement, ainsi qu'un véhicule automobile comprenant un tel dispositif électrique de freinage de stationnement.

L'invention trouve son application notamment, mais non exclusivement, à des dispositifs mécaniques appartenant au domaine technique de l'automobile. Dans ce cas, il s'agit par exemple d'un dispositif électrique de freinage de stationnement, d'un dispositif électrique de correction de hauteur de l'assiette, ou encore d'un dispositif permettant de régler la hauteur d'un siège. Cependant, l'invention trouve son application à des domaines techniques différents de celui de l'automobile, à savoir notamment un vérin linéaire pour une application nécessitant une faible course, de l'ordre par exemple de 50 mm, ainsi que des efforts importants, de l'ordre par exemple de 200 kg, en particulier un vérin de réglage de lit.

Dans le cas d'un dispositif électrique de freinage de stationnement, comme cela est par exemple connu de FR-A-2 848 970, un tel dispositif comprend tout d'abord un moteur électrique, le plus souvent associé à un réducteur. Ce moteur est propre à entraîner en rotation une vis sans fin, qui induit le déplacement en translation d'un écrou. Ce dernier, qui peut être associé à un palonnier de répartition des efforts, assure l'actionnement d'au moins un câble, dont chacun est destiné à la commande d'un frein correspondant du véhicule.

En phase de serrage, le moteur et son éventuel réducteur fournissent l'énergie nécessaire pour tirer sur le câble précité, relié au frein correspondant, cet ensemble formé du câble et du frein pouvant être assimilé à un ressort qu'il s'agit de comprimer. Ainsi, le moteur, la vis sans fin et l'écrou composent un ensemble d'actionnement, qui équipe ce dispositif électrique de freinage de stationnement.

Ceci étant précisé, l'invention vise à fournir un ensemble d'actionnement pour dispositif mécanique, tel qu'un dispositif électrique de freinage de stationnement, qui est d'un coût réduit par rapport à ceux connus de l'état de la technique. L'invention vise également à proposer un tel ensemble d'actionnement, qui est plus simple et plus compact que dans l'art antérieur. L'invention vise enfin à proposer un tel ensemble d'actionnement, qui est peu bruyant et qui présente un rendement satisfaisant.

A cet effet, elle a pour objet un ensemble d'actionnement pour dispositif mécanique, en particulier pour dispositif électrique de freinage de stationnement, cet ensemble d'actionnement comprenant:
- un moteur possédant un arbre rotatif,
- un boîtier dans lequel sont reçus ledit arbre, ainsi qu'une spirale formée d'un certain nombre d'enroulements,
- un organe intermédiaire, lié en rotation audit arbre, tout en étant libre en translation par rapport à cet arbre, au moins selon la direction principale de ce dernier, et
- un organe d'actionnement, sensiblement lié en translation par rapport à l'organe intermédiaire tout en étant libre en rotation par rapport à cet organe intermédiaire, au moins selon l'axe principal de l'arbre, des enroulements de la spirale étant propres à passer de part et d'autre de l'organe intermédiaire, lors de sa mise en rotation, de manière à provoquer le déplacement axial de cet organe intermédiaire et de l'organe d'actionnement.

Selon d'autres caractéristiques de l'invention:
- l'organe intermédiaire possède un corps en forme de disque, une échancrure de passage des enroulements de la spirale étant creusée dans ce corps ;
- le corps en forme de disque de l'organe intermédiaire est pourvu, sur au moins une de ses faces, de galets le long desquels est propre à glisser ladite spirale ;
- l'organe d'actionnement présente un corps annulaire, à l'intérieur duquel peut passer la spirale ;
- le corps annulaire est prolongé par au moins une projection, faisant saillie radialement vers l'extérieur, propre à pénétrer au travers d'au moins une fente ménagée dans le boîtier;
- chaque enroulement de la spirale possède une épaisseur comprise entre 0,1 et 1 mm, de préférence entre 0,1 et 0,3 mm ;
- les enroulements de la spirale possèdent une épaisseur variable, selon la direction longitudinale de cette spirale ;
- des billes sont intercalées entre des parois en regard de l'organe intermédiaire et de l'organe d'actionnement.

L'invention a également pour objet un dispositif électrique de freinage de stationnement pour véhicule automobile, comprenant au moins un câble de commande d'au moins un frein de ce véhicule, ainsi qu'un ensemble d'actionnement du ou de chaque câble, caractérisé en ce que l'ensemble d'actionnement est tel que défini ci-dessus.

Selon d'autres caractéristiques de l'invention:
- la spirale possède des premiers enroulements présentant une première épaisseur constante, qui sont propres à passer de part et d'autre de l'organe intermédiaire et de l'organe d'actionnement lors d'une phase initiale de serrage, des seconds enroulements présentant une seconde épaisseur constante, inférieure à ladite première épaisseur, qui sont propres à passer de part et d'autre de l'organe intermédiaire et de l'organe d'actionnement en phase terminale de ce serrage, ainsi que des enroulements intermédiaires présentant une épaisseur qui varie entre lesdites première et seconde épaisseurs ;
- une extrémité de chaque câble est reçue dans une projection correspondante.

L'invention a enfin pour objet un véhicule automobile comprenant au moins un dispositif électrique de freinage de stationnement, tel que défini ci-dessus.

L'invention va être décrite ci-après, en référence aux dessins annexés, donnés uniquement à titre d'exemples non limitatifs, dans lesquels:
- les figures 1 et 2 illustrent un dispositif électrique de freinage de stationnement conforme à l'invention, vu respectivement de dessus et de côté ;
- la figure 3 est une vue en perspective, illustrant une spirale, un moyeu et un palonnier appartenant à un ensemble d'actionnement qui équipe le dispositif électrique de freinage de stationnement des figures 1 et 2 ;
- la figure 4 est une vue en coupe longitudinale, illustrant plus précisément ce moyeu et ce palonnier ;
- la figure 5 est un graphe, illustrant différents types de variations de l'épaisseur de la spirale représentée notamment à la figure 3 ;
- la figure 6 est une vue de dessus, analogue à la figure 1, illustrant le fonctionnement de l'ensemble d'actionnement représenté sur cette figure 1 ; et
- la figure 7 est une vue en coupe longitudinale, illustrant le profil d'une spirale conforme à une variante de réalisation de l'invention.

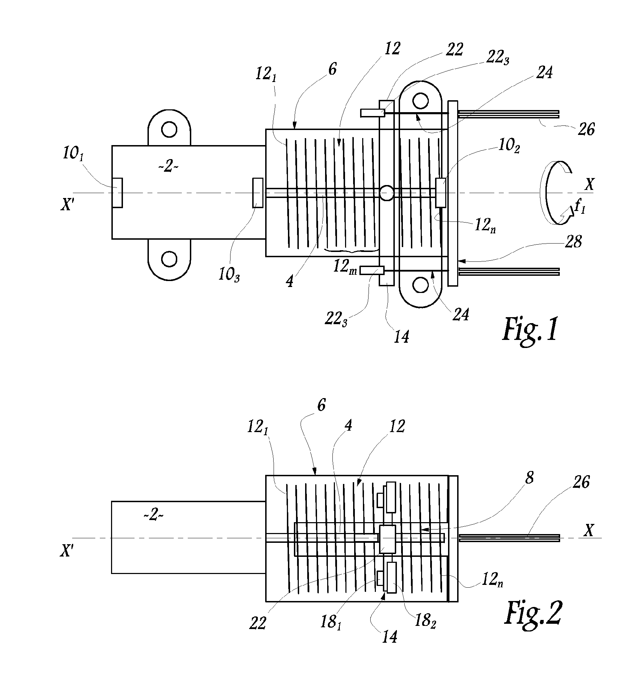

Le dispositif électrique de freinage de stationnement, illustré sur les figures 1 et 2, comporte un ensemble d'actionnement, qui comprend tout d'abord un moteur électrique 2. Ce dernier, qui est de type connu en soi, est fixé sur un châssis d'un véhicule, par tout moyen approprié. Ce moteur possède un arbre rotatif 4, dont l'axe principal est noté X'-X.

Cet arbre présente une section transversale qui n'est pas circulaire, mais qui est en particulier hexagonale, ou encore carrée. Ce type de section permet à cet arbre d'entraîner en rotation un moyeu, comme on le verra plus en détail dans ce qui suit.

L'arbre 4 est reçu dans un boîtier 6, coaxial au moteur 2. Comme le montre notamment la figure 2, ce boîtier est creusé de deux fentes axiales, dont seule l'une 8 est visible sur cette figure 2. Ces fentes 8, qui sont diamétralement opposées, permettent le passage et le blocage en rotation d'un palonnier, comme on le verra plus en détail dans ce qui suit.

Il est en outre prévu trois paliers, destinés à guider le moteur et son arbre. De façon plus précise, on retrouve un palier 10₁ de guidage du moteur, à l'opposé de son arbre, un palier 10₂ de guidage de l'arbre, à l'opposé du moteur 2, ainsi qu'un palier intermédiaire 10₃, destiné à guider à la fois le moteur et son arbre.

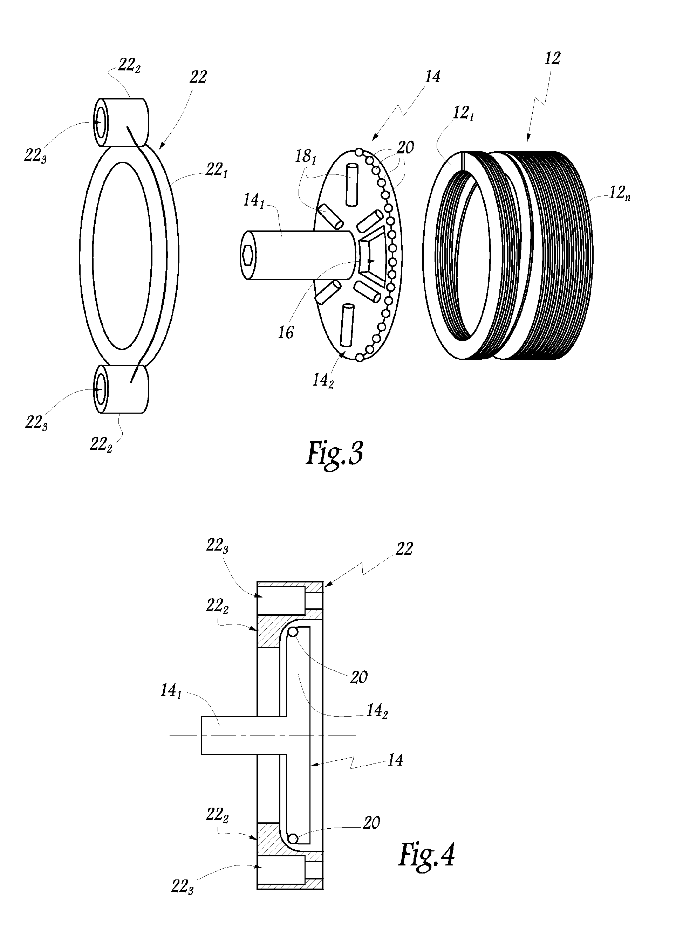

L'ensemble d'actionnement comporte également une spirale 12, représentée notamment à la figure 3, qui se trouve logée en service dans le boîtier 6. Cette spirale se trouve fixée par rapport au boîtier à au moins une de ses extrémités, en particulier celle opposée au moteur 2, située à droite sur les figures 1 et 2, à savoir au voisinage du palier 10₂. Par ailleurs, cette spirale se trouve bloquée sur son diamètre extérieur, à sa périphérie, par rapport au boîtier.

La spirale 12 est réalisée en tout matériau approprié, comme par exemple en acier, auquel cas elle se présente sous forme d'un clinquant. A titre d'alternative, cette spirale peut être réalisée en une matière plastique, éventuellement chargée de fibres de verre.

On note 12₁ à 12ₙ les différents enroulements de la spirale. A titre d'exemple, l'épaisseur de ces enroulements est comprise entre 0,1 et 0,3 mm. On notera également que cette épaisseur peut, soit être identique sur l'ensemble de la spirale 12, soit être variable le long des différents enroulements composant cette spirale.

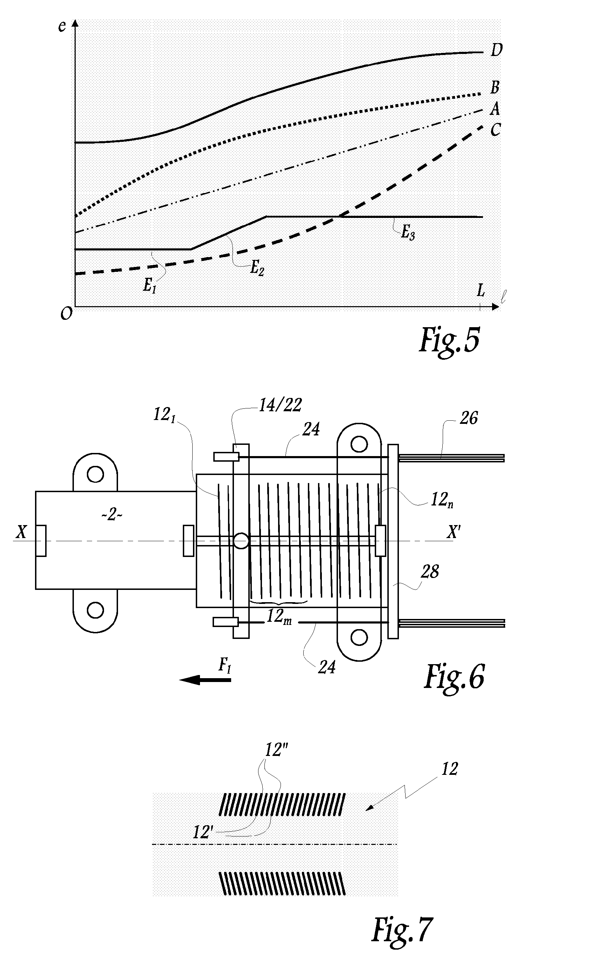

La figure 5 illustre différents types de variations, qu'est susceptible d'affecter l'épaisseur de la spirale. Les graphes de cette figure 5 illustrent la variation de l'épaisseur e de la spirale en fonction de la longueur l, à savoir de la position occupée par l'enroulement considéré. En d'autres termes, une longueur l=0 correspond à l'enroulement initial 12₁, situé du côté du moteur 2, alors qu'une longueur l=L correspond à la position de l'enroulement d'extrémité 12ₙ opposé à ce moteur.

Comme l'illustre la courbe A de cette figure 5, l'épaisseur de la spirale peut tout d'abord augmenter de façon continue, depuis l'enroulement 12₁ jusqu'à l'enroulement 12ₙ. Cette variation peut être de type concave, à savoir la courbe B, ou de type convexe, à savoir la courbe C, ou encore présenter plusieurs points d'inflexion, à savoir la courbe D.

La courbe E illustre un profil avantageux de variation d'épaisseur de la spirale, en particulier pour une application à un dispositif de freinage de stationnement électrique. On retrouve tout d'abord une portion E₁, pour laquelle l'épaisseur est constante depuis l'enroulement 12₁ jusqu'à un premier enroulement intermédiaire, puis une portion E₂ où cette épaisseur augmente continûment jusqu'à un second enroulement intermédiaire. Enfin, on retrouve une zone E₃ où cette épaisseur est à nouveau constante, depuis le second enroulement intermédiaire jusqu'à l'enroulement final 12ₙ.

Comme le montrent les figures 3 et 4, l'ensemble d'actionnement conforme à l'invention comprend également un moyeu 14 reçu dans le boîtier 6. Ce moyeu 14 comporte tout d'abord une partie tubulaire 14₁, dans laquelle est ménagée une ouverture propre à coopérer avec l'arbre 4, en l'occurrence de forme hexagonale, mais qui peut également être carrée.

Cette partie tubulaire 14₁ est prolongée par un corps 14₂ en forme de disque, dans lequel est ménagée une échancrure 16, qui s'étend sur un secteur angulaire relativement faible, par exemple compris entre 60 et 120°. Cette échancrure 16 est creusée depuis le voisinage de la partie tubulaire 14₁ jusqu'à la périphérie du corps 14₂, tout en ne débouchant pas radialement vers l'extérieur.

Le disque 14₂ est équipé de deux jeux de galets 18₁ et 18₂, prévus respectivement sur les faces opposées de ce disque, qui sont également visibles sur la figure 2. De façon avantageuse, chaque jeu comprend par exemple entre six et douze galets, de façon à garantir une pression de contact assez faible. Le disque 14₂ est en outre équipé de billes 20, placées à sa périphérie, qui sont destinées à coopérer avec un palonnier, comme on le verra dans ce qui suit.

Enfin, l'ensemble d'actionnement de l'invention comporte un palonnier 22, illustré également sur les figures 3 et 4, qui comprend un corps annulaire 22₁. La paroi de ce corps tournée vers le moyeu 14 présente une forme de portion de sphère (figure 4), de sorte que les billes 20 du moyeu 14 peuvent coopérer avec ces parois en regard. Le corps annulaire 22₁ est prolongé par deux projections 22₂, faisant saillie radialement vers l'extérieur, tout en étant diamétralement opposées l'une de l'autre. Ces projections 22₂ sont propres à pénétrer au travers des fentes 8, ménagées dans le boîtier 6.

Sur la figure 3, la spirale 12, le moyeu 14 et le palonnier 22 sont représentés les uns à côté des autres. Cependant, en service, le moyeu 14 et le palonnier 22 sont disposés de façon adjacente, comme le montre la figure 4, alors que la spirale 12 traverse, au niveau d'un de ses enroulements médians, l'échancrure 16 du moyeu 14 et le corps annulaire 22₁ du palonnier 22. On notera également que, sur les figures 1, 2 et 6, le moyeu 14 et le palonnier 22 sont représentés de façon schématique.

Comme il ressort de ce qui précède, en service, le moyeu 14 est lié en rotation par rapport à l'arbre 4, de section non circulaire, tout en étant libre en translation par rapport à cet arbre, selon l'axe principal X'-X. Le palonnier 22 se trouve libre en rotation par rapport au moyeu 14, autour de cet axe X'-X, tout en étant immobilisé en rotation par les fentes 8 du boîtier 6, la fonction de répartition des efforts étant assurée par ce palonnier 22.

En revanche, ce palonnier 22 et ce moyeu 14 sont globalement liés en translation l'un par rapport à l'autre, par l'intermédiaire des billes 20 et de la spirale 12. On notera cependant que ce palonnier 22 dispose d'une légère possibilité de basculement d'arrière en avant, par rapport au moyeu 14, grâce à la coopération des billes 20 avec les parois du palonnier 22 en forme de portion de sphère.

En outre, ce palonnier est libre en translation par rapport au boîtier 6, mais se trouve bloqué en rotation, par coopération des projections 22₂ avec les parois des fentes 8. Enfin, la spirale 12 est à peu près fixe par rapport au boîtier 6. En effet, elle ne tourne pas par rapport à ce boîtier, et ne se déplace en outre globalement pas en translation par rapport à celui-ci, exception faite de la zone où glissent le moyeu 14 et le palonnier 22, comme on le verra dans ce qui suit.

Dans l'exemple illustré, l'ensemble d'actionnement, composé essentiellement du moteur 2 et de son arbre rotatif 4, ainsi que de la spirale 12, du moyeu 14 et du palonnier 22, équipe un dispositif électrique de freinage de stationnement. A cet effet, chaque projection 22₂ est creusée d'un logement 22₃ destiné à la réception d'une extrémité, ou tête, de câble correspondant 24, comme le montrent notamment les figures 1 et 4. Chaque câble 24, qui est pourvu d'une gaine 26, est relié de façon classique à un frein non représenté, appartenant à un véhicule automobile. Ces deux câbles 24 sont par ailleurs associés à une butée fixe 28 pour les gaines 26, qui est également de type connu en soi.

L'utilisation de l'ensemble d'actionnement décrit ci-dessus, ainsi que du dispositif électrique de freinage de stationnement qui en est équipé, va être explicitée dans ce qui suit.

On suppose que l'ensemble d'actionnement se trouve initialement dans la position de la figure 1, à savoir que le moyeu 14 et le palonnier 22 sont au voisinage de l'extrémité du boîtier 6, opposée au moteur 2. Dans ces conditions, il n'existe sensiblement aucune tension exercée sur les câbles 24, de sorte que le dispositif électrique de freinage de stationnement se trouve en position de repos.

Si l'on désire freiner, il s'agit d'actionner le moteur 2, par exemple grâce à un interrupteur non représenté, de façon à mettre en mouvement l'arbre 4 autour de son axe X'-X, selon le sens anti-horaire matérialisé par la flèche f₁. Dans ces conditions, le moyeu 14 se trouve également entraîné en rotation, dans ce même sens, par coopération de l'arbre 4 avec sa partie tubulaire 14₁.

Etant donné que la spirale 12 est insérée dans l'échancrure 16 du moyeu 14, ce mouvement de rotation du moyeu conduit celui-ci à parcourir cette spirale 12, de sorte que cette dernière se dévide au travers de la l'échancrure précitée 16. En d'autres termes, les enroulements notés 12ₘ, qui se trouvent initialement à gauche du moyeu 14 sur la figure 1, traversent l'échancrure 16 puis se retrouvent à droite du moyeu 14. La position finale de ces enroulements 12ₘ se trouve illustrée sur la figure 6.

On conçoit donc que le passage de ces enroulements, depuis la gauche vers la droite du moyeu 14, conduit à la mise en translation de ce dernier vers la gauche, selon la flèche F₁ sur la figure 6. On notera que, lors de ce mouvement du moyeu 14 le long de la spirale 12, les galets 18₂, situés à droite du moyeu sur les figures 1, 2 et 5, sont soumis à l'essentiel de l'effort de frottement. En revanche, ceux 18₁ situés à l'opposé assurent avant tout une fonction de guidage. Dans ces conditions, la disposition, le nombre et les dimensions de ces deux jeux de galets 18₁, 18₂ peuvent être différents.

Comme on vient de le voir, la mise en marche du moteur 2 induit une translation du moyeu 14, vers la gauche selon l'axe X'-X, accompagnée d'une rotation autour de ce même axe. Ceci s'accompagne d'une mise en translation correspondante du palonnier 22, qui se trouve lié en translation par rapport au moyeu 14. Cependant, ce palonnier n'est pas astreint à pivoter, puisqu'il est libre en rotation par rapport au moyeu 14 et que les projections 22₂ viennent en butée contre les parois des fentes 8 du boîtier 6.

Par conséquent, le palonnier 22 possède essentiellement un mouvement de translation, ce qui assure la mise en traction des câbles 24. Ceci permet donc d'actionner le dispositif électrique de freinage de stationnement, illustré notamment sur les figures 1, 2 et 6. Ce palonnier 22 forme donc un organe d'actionnement, alors que le moyeu 14 forme un organe intermédiaire, assurant la transmission du mouvement entre l'arbre 4 et ce palonnier.

On notera que la valeur de l'épaisseur de la spirale 12 est importante, dans la mesure où elle détermine la vitesse de translation du moyeu 14 et du palonnier 22. En d'autres termes, à chaque tour du moyeu 14, la valeur de son déplacement linéaire augmente avec l'épaisseur de l'enroulement, qui vient de traverser l'échancrure 16 ménagée dans ce moyeu 14.

En supposant que, sur les différentes figures, l'épaisseur de la spirale 12 varie selon la courbe E à la figure 2, on constate que la vitesse de translation du moyeu et du palonnier est tout d'abord relativement importante au début de la phase de serrage, qui correspond au passage le long de la zone E₃. Puis, au fur et à mesure que l'épaisseur de la spirale diminue, soit la zone E₂, la vitesse de translation du moyeu et du palonnier est réduite. Enfin, la vitesse de translation se stabilise à une valeur minimale, qui correspond au passage du moyeu et du palonnier le long de la zone E₁ de la spirale 12.

L'invention n'est pas limitée à l'exemple décrit et représenté.

Ainsi, en référence à la figure 7, la spirale 12 peut être formée par une ou plusieurs lame (s) inclinée (s) à la façon d'une rondelle BELLEVILLE. Comme le montre cette figure, vu en coupe longitudinale, le bord intérieur 12' de cette spirale fait saillie vers la gauche, c'est-à-dire en direction du moteur 2, par rapport à son bord extérieur 12". Cette mesure est avantageuse, étant donné que cette spirale dispose ainsi d'une réserve élastique, qui peut être utilisée dans le cas d'une réduction d'épaisseur des disques de freinage, notamment suite à un refroidissement ambiant.

Dans l'exemple ci-dessus, l'ensemble d'actionnement conforme à l'invention équipe un dispositif électrique de freinage de stationnement. Cependant, il est susceptible d'être utilisé dans d'autres types de dispositifs mécaniques. A titre non limitatif, on citera par exemple un dispositif de correction d'assiette, dans lequel le palonnier n'actionne pas des câbles, mais agit sur la longueur d'un ressort de suspension.

L'ensemble d'actionnement conforme à l'invention trouve également son application à un dispositif permettant de régler la hauteur d'un siège. Il peut aussi être intégré directement dans l'étrier de frein ou le plateau de frein, pour réaliser le frein de stationnement ou bien le freinage principal du véhicule.

L'invention permet de réaliser les objectifs précédemment mentionnés.

En effet, le dispositif d'actionnement conforme à l'invention est d'une structure simple, ce qui lui assure un coût réduit par rapport à l'art antérieur. En particulier, grâce à l'invention, il est possible de s'affranchir de l'utilisation d'un réducteur, d'une vis sans fin et d'un écrou.

De plus, le dispositif d'actionnement de l'invention est d'un encombrement restreint. Dans le cas où il équipe un dispositif électrique de freinage de stationnement, cet ensemble d'actionnement se monte en lieu et place d'une poignée de frein à main habituel.

De plus, le bruit généré en service par cet ensemble d'actionnement est faible, étant donné qu'il permet de s'affranchir de tout choc au niveau des pignons.

Enfin, utiliser une spirale permet de conférer le cas échéant au moyeu et au palonnier un déplacement en translation non linéaire. Ceci est notamment autorisé par la variation possible de l'épaisseur de la spirale, comme on l'a vu ci-dessus.

## Revendications

1. Ensemble d'actionnement pour dispositif mécanique, en particulier pour dispositif électrique de freinage de stationnement, cet ensemble d'actionnement comprenant:
- un moteur (2) possédant un arbre rotatif (4),
- un boîtier (6) dans lequel sont reçus ledit arbre (4), ainsi qu'une spirale (12) formée d'un certain nombre d'enroulements (12₁-12ₙ),
- un organe intermédiaire (14), lié en rotation audit arbre (4), tout en étant libre en translation par rapport à cet arbre (4), au moins selon la direction principale (X'-X) de ce dernier, et
- un organe d'actionnement (22), sensiblement lié en translation par rapport à l'organe intermédiaire (14) tout en étant libre en rotation par rapport à cet organe intermédiaire (14), au moins selon l'axe principal de l'arbre,
des enroulements (12ₘ) de la spirale (12) étant propres à passer de part et d'autre de l'organe intermédiaire (14), lors de sa mise en rotation, de manière à provoquer le déplacement axial de cet organe intermédiaire (14) et de l'organe d'actionnement (22).

2. Ensemble d'actionnement pour dispositif mécanique selon la revendication 1, **caractérisé en ce que** l'organe intermédiaire (14) possède un corps (14₂) en forme de disque, une échancrure (16) de passage des enroulements de la spirale (12) étant creusée dans ce corps (14₂).

3. Ensemble d'actionnement pour dispositif mécanique selon la revendication 2, **caractérisé en ce que** le corps (14₂) en forme de disque de l'organe intermédiaire (14) est pourvu, sur au moins une de ses faces, de galets (18₁, 18₂) le long desquels est propre à glisser ladite spirale (12).

4. Ensemble d'actionnement pour dispositif mécanique selon l'une quelconque des revendications précédentes, **caractérisé en ce que** l'organe d'actionnement présente un corps annulaire (22₁), à l'intérieur duquel peut passer la spirale (12).

5. Ensemble d'actionnement pour dispositif mécanique selon la revendication 4, **caractérisé en ce que** le corps annulaire (22₁) est prolongé par au moins une projection (22₂), faisant saillie radialement vers l'extérieur, propre à pénétrer au travers d'au moins une fente (8) ménagée dans le boîtier (6).

6. Ensemble d'actionnement pour dispositif mécanique selon l'une quelconque des revendications précédentes, **caractérisé en ce que** chaque enroulement (12₁-12ₙ) de la spirale (12) possède une épaisseur comprise entre 0,1 et 1 mm, de préférence entre 0,1 et 0,3 mm.

7. Ensemble d'actionnement pour dispositif mécanique selon la revendication 6, **caractérisé en ce que** les enroulements de la spirale (12) possèdent une épaisseur variable, selon la direction longitudinale de cette spirale (12).

8. Ensemble d'actionnement pour dispositif mécanique selon l'une quelconque des revendications précédentes, **caractérisé en ce que** des billes (20) sont intercalées entre des parois en regard de l'organe intermédiaire (14) et de l'organe d'actionnement (22).

9. Dispositif électrique de freinage de stationnement pour véhicule automobile, comprenant au moins un câble de commande (24) d'au moins un frein de ce véhicule, ainsi qu'un ensemble d'actionnement (2, 4, 14, 22) du ou de chaque câble, **caractérisé en ce que** l'ensemble d'actionnement est conforme à l'une quelconque des revendications précédentes.

10. Dispositif électrique de freinage de stationnement selon la revendication 9, comprenant un ensemble d'actionnement selon la revendication 7 ou 8, **caractérisé en ce que** la spirale (12) possède des premiers enroulements (E₃) présentant une première épaisseur constante, qui sont propres à passer de part et d'autre de l'organe intermédiaire et de l'organe d'actionnement lors d'une phase initiale de serrage, des seconds enroulements (E₁) présentant une seconde épaisseur constante, inférieure à ladite première épaisseur, qui sont propres à passer de part et d'autre de l'organe intermédiaire (14) et de l'organe d'actionnement (22) en phase terminale de ce serrage, ainsi que des enroulements intermédiaires (E₂) présentant une épaisseur qui varie entre lesdites première et seconde épaisseurs.

11. Dispositif électrique de freinage de stationnement selon la revendication 9 ou 10, comprenant un ensemble d'actionnement selon l'une des revendications 5 à 8 **caractérisé en ce qu'**une extrémité de chaque câble (24) est reçue dans une projection correspondante (22₂). 12 Véhicule automobile comprenant au moins un dispositif électrique de freinage de stationnement, conforme à l'une des revendications 9 à 11.
